# EUROPÄISCHE PATENTSCHRIFT

(11) **EP 0 270 856 B1**
(45) Veröffentlichungstag und Bekanntmachung des Hinweises auf die Patenterteilung: **28.07.1993**
(21) Anmeldenummer: 87116531.2
(22) Anmeldetag: 09.11.1987
(51) Int. Cl.: B01J 35/04, F01N 3/28

(54) **Metallischer Katalysator-Trägerkörper und Verfahren zu seiner Herstellung**
Metal support for a catalyst and method for its production
Support métallique de catalyseur et son procédé de fabrication

(30) Priorität: 20.11.1986 DE 3639597
(43) Veröffentlichungstag der Anmeldung: 15.06.1988
(73) Patentinhaber: Emitec Gesellschaft für Emissionstechnologie mbH, 53797 Lohmar (DE)
(72) Erfinder: Cyron, Theodor, Dipl.-Ing., D-5060 Bergisch-Gladbach 1 (DE); Vierkötter, Manfred, D-5206 Neunkirchen-Seel. 2 (DE); Hetzelberger, Rolf, Dipl.-Ing., D-5000 Köln 1 (DE)
(74) Vertreter: Kahlhöfer, Hermann, Dipl.-Phys.

(56) Entgegenhaltungen:
- DE-A- 2 856 030
- FR-A- 1 421 463
- GB-A- 1 491 198
- US-A- 3 876 556

## Beschreibung

Die vorliegende Erfindung betrifft einen Rohling zur Herstellung eines abgeflachten Katalysator-Trägerkörpers nach dem Oberbegriff des Anspruchs 1.

Bei sogenannten Startkatalysatoren, das sind Katalysatoren, welche motornah eingebaut werden und daher sehr schnell nach dem Start des Motors auf Betriebstemperatur gelangen, ist es bekannt, metallische Trägerkörper aus spiralig gewickelten abwechselnden Lagen glatter und gewellter Bleche zu verwenden. Um den Druckverlust dieser Katalysator-Trägerkörper gering zu halten, wird dabei teilweise vorgesehen, den Zentralbereich möglichst frei von Wicklungen zu behalten, damit dort ein Teil der Abgase ungehindert hindurchströmen kann. Dies ist deshalb akzeptabel, weil Startkatalysatoren im allgemeinen in Verbindung mit anderen schadstoffsenkenden Maßnahmen betrieben werden.

Bisher wurden solche Katalysator-Trägerkörper beispielsweise auf einen zylindrischen Dorn gewickelt, wobei die ersten beiden Lagen z. B. durch einen Schlitz in dem Dorn fixiert werden konnten. Eine typische, auf diese Weise entstehende Form weist nach dem Herausziehen des Dorns noch irgenowie verlaufende Enden der inneren Lagen im Zentralbereich auf, welche die Strömung stören ohne nennenswerte Beiträge zur katalytischen Umsetzung leisten zu können.

Beim Wickeln auf einen zylindrischen Dorn wird außerdem typischerweise ein glattes Blech als innerste Lage verwendet, wobei sich in der Serienproduktion bei schnellen Taktzeiten Schwierigkeiten ergeben, dessen Ende zu fassen.

Aus der DE-OS-28 56 030 ist ferner ein Rohling zur Herstellung eines abgeflachten Katalysator-Trägerkörpers bekannt, welcher ebenfalls auf einen zylindrischen Dorn aufgewickelt wird. Für diesen Bautyp und den zugehörigen Herstellungsprozeß gelten am Anfang des Aufwickelns die gleichen Aussagen wie bei den oben genannten Startkatalysatoren.

Aufgabe der vorliegenden Erfindung ist die Herstellung eines Katalysator-Trägerkörpers bzw. eines Rohlings zu dessen endgültiger Herstellung mit einem wicklungsfreien Zentralbereich, bei denen die oben genannten Probleme nicht auftreten.

Zur Lösung dieser Aufgabe wird gemäß dem Anspruch 1 vorgeschlagen, daß die innerste Lage des Rohlings, die den wicklungsfreien Zentralbereich umschließt, aus einem gewellten Blech bestehen soll. Die Wellung der innersten Lage stört weder den zentralen Anteil der Strömung, noch bestehen Probleme, falls der Katalysator-Trägerkörper später zu einer flachen Form zusammengedrückt werden soll.

Beim Einbau in ein Mantelrohr ist es vorteilhaft, wie in Anspruch 2 beschrieben, eine Stirnseite des Katalysator-Körpers zu verlöten und dabei auch mit dem Mantelrohr zu verbinden, während die andere Stirnseite nur im Bereich einiger der innersten Lagen verlötet wird. Dadurch werden die Dehnung und das Wachstum des Katalysator-Trägerkörpers im Mantel nicht behindert, die innersten Lagen können jedoch wegen der beidseitigen Verlötung nicht flattern oder instabil werden.

Bei einem Herstellungsverfahren gemäß dem Anspruch 3 ergeben sich erhebliche Vorteile, da die innerste Lage statt auf einen zylindrischen Dorn auf ein Zahnwalze gewickelt werden kann, deren Zahnung etwa der Wellung der gewellten Bleche entspricht. Wird ein gewelltes Blechband einer solchen rotierenden Zahnwalze zugeführt, so erfaßt die Walze das gewellte Blechband in praktisch jeder Stellung und kann den zum weiteren Aufwickeln nötigen Zug aufbringen. Ein Einfädeln der Enden der glatten bzw. gewellten Blechbänder z. B. in einen geschlitzten Dorn entfällt völlig, wodurch die Taktzeiten bei der Herstellung minimiert werden können. Im übrigen ergeben sich jedenfalls keine Nachteile durch die Verwendung einer Zahnwalze statt eines zylindrischen Dornes, so daß alle weiteren Produktionsschritte unverändert bleiben können. Die Zahnwalze wird nach Beendigung des Aufwickelns herausgezogen und der entstehende Katalysator-Trägerkörper bzw. Rohling den an sich bekannten weiteren Herstellungsschritten unterzogen, beispielsweise Umschließen mit einem Mantelrohr, Beloten, Löten, Beschichten usw.

Falls aus Stabilitätsgründen gewünscht, können auch zunächst zwei oder mehrere Lagen des gewellten Blechbandes auf die Zahnwalze gewickelt werden, bevor durch Hinzufügen eines glatten Blechbandes die eigentliche Wabenstruktur aufgewickelt wird. Durch Verwendung einer Zahnwalze als Dorn ist sichergestellt, daß auch eine zweite oder dritte Lage eines gewellten Blechbandes sich nahezu formschlüssig an die erste Blechlage anschmiegt, solange kein glattes Blechband als Zwischenlage hinzukommt. Es entsteht so eine stabile, aus mehreren Schichten bestehende, gewellte innerste Lage, die den wicklungsfreien Zentralbereich von dem eigentlichen Wabenkörper trennt. Durch fügetechnische Maßnahmen, z. B. Löten, Schweißen oder Kleben kann das Ende der innersten Lage zusätzlich fixiert werden.

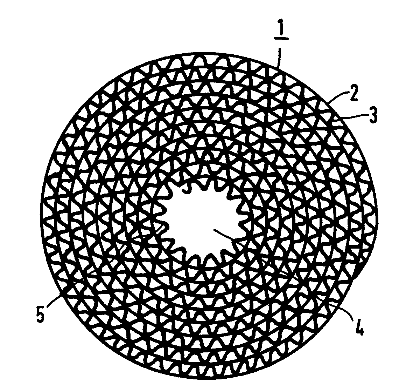

Ein Ausführungsbeispiel der Erfindung ist schematisch im Querschnitt in der Zeichnung dargestellt. Der Katalysator-Trägerkörper 1 ist aus einem glatten 2 und einem gewellten 3 Blechstreifen spiralig aufgewickelt, wobei ein wicklungsfreier Zentralbereich 4 ausgespart ist. Der Wicklungsfreie Zentralbereich 4 wird von einer innersten, gewellten Blechlage 5 umschlossen. Je nach den Anforderungen an die Stabilität und Qualität der den Zentralbereich umschließenden Begrenzung, können auch zwei oder mehrere gewellte Lagen formschlüssig übereinanderliegen, bevor durch das Hinzukommen des glatten Blechbandes der Aufbau des eigentlichen Wabenkörpers beginnt. Da die verwendeten Bleche sehr dünn sind, ergibt sich ein weiterer Vorteil bei der beschriebenen Herstellungsmethode. Es kommt nicht genau darauf an, wann mit dem Hinzufügen des glatten Blechbandes bei dem Wickelprozeß begonnen wird.

Differenzen von ein bis zwei Umdrehungen erhöhen zwar die Anzahl der zunächst übereinandergewickelten gewellten Blechlagen, verändern aber den Gesamtdurchmesser des Körpers nur um Bruchteile von Millimetern, was nicht von großer Bedeutung ist.

Durch die vorliegende Erfindung wird daher der Beginn des Aufwickelns eines Katalysator-Trägerkörpers mit wicklungsfreiem Zentralbereich stark erleichtert, da ein Einfädeln entfällt und mögliche Fehlerquellen erheblich reduziert werden können. Auf diese Weise lassen sich die Taktzeiten beim Herstellungsprozeß verringern. In der weiteren Bearbeitung entstehen jedoch gegenüber dem Stand der Technik keine Unterschiede oder gar Nachteile.

## Patentansprüche

1. Rohling (1) zur Herstellung eines abgeflachten Katalysator-Trägerkörpers aus spiralig gewickelten abwechselnden Lagen glatter (2) und gewellter (3) Bleche mit einem wicklungsfreien Zentralbereich (4), **dadurch gekennzeichnet,** daß zumindest die innerste Lage (5), die den wicklungsfreien Zentralbereich (4) umschließt, aus einem gewellten Blech (3) besteht.

2. Katalysator-Trägerkörper aus spiralig gewickelten abwechselnden Lagen glatter (2) und gewellter (3) Bleche mit einem wicklungsfreien Zentralbereich (4), der in einem Mantelrohr angeordnet ist, **dadurch gekennzeichnet,** daß zumindest die innerste Lage (5), die den wicklungsfreien Zentralbereich (4) umschließt, aus einem gewellten Blech (3) besteht, wobei an einer Stirnseite Lötverbindungen zwischen den Lagen untereinander und mit dem Mantelrohr bestehen, während an der anderen Stirnseite nur die innersten zwei bis zehn Lagen untereinander verlötet sind.

3. Verfahren zur Herstellung eines Rohlings nach Anspruch 1 bzw. eines Katalysator-Trägerkörpers nach Anspruch 2, **dadurch gekennzeichnet,** daß auf eine Zahnwalze, deren Zahnung etwa der Wellung der gewellten Bleche entspricht, übereinander erst ein gewelltes (3) und dann ein glattes (2) Blech spiralig aufgewickelt werden, wonach die Zahnwalze herausgezogen wird und weitere Herstellungsschritte in an sich bekannter Weise erfolgen.

## Claims

1. A blank (1) for the production of a flattened catalyst carrier body comprising spirally wound alternate layers of smooth (2) and corrugated (3) metal sheets with a winding-free central region (4) characterised in that at least the innermost layer (5) which surrounds the winding-free central region (4) comprises a corrugated metal sheet (3).

2. A catalyst carrier body comprising spirally wound alternate layers of smooth (2) and corrugated (3) metal sheets with a winding-free central region (4) which is disposed in a casing tube, characterised in that at least the innermost layer (5) which surrounds the winding-free central region (4) comprises a corrugated metal sheet (3), wherein brazed connections exist at one end between the layers relative to each other and to the casing tube while at the other end only the innermost two to ten layers are brazed to each other.

3. A process for the production of a blank according to claim 1 or a catalyst carrier body according to claim 2 characterised in that firstly a corrugated metal sheet (3) and then a smooth metal sheet (2) are wound spirally in superposed relationship on to a toothed roller whose tooth configuration approximately corresponds to the corrugation of the corrugated metal sheets, whereafter the toothed roller is drawn out and further production steps are effected in per se known manner.

## Revendications

1. Un article brut (1) pour la production d'un corps support aplati de catalyseur, formé à partir de couches alternées enroulées en spirale de tôles lisses (2) et ondulées (3) avec une région centrale sans enroulement (4), *caractérisé en ce qu'*au moins la couche située la plus à l'intérieur (5), qui entoure la région centrale sans enroulement (4), est formée d'une tôle ondulée (3).

2. Un corps support de catalyseur, formé à partir de couches alternées enroulées en spirale de tôles lisses (2) et ondulées (3) avec une région centrale sans enroulement (4), ce corps support étant disposé dans un manchon tubulaire, *caractérisé en ce qu'*au moins la couche située la plus à l'intérieur (5), qui entoure la région centrale sans enroulement (4), est formée d'une tôle ondulée (3), des liaisons soudées des couches entre elles et avec le manchon tubulaire étant présentes du côté d'une face frontales, tandis que, du côté de l'autre face frontale, seules les deux à dix couches situées les plus à l'intérieur sont soudées entre elles.

3. Procédé pour la production d'un article brut selon la revendication 1 ou, respectivement, d'un corps support de catalyseur selon la revendication 2, *caractérisé en ce que* l'on enroule l'une sur l'autre en spirale, sur un cylindre denté dont la denture correspond approximativement à l'ondulation des tôles ondulées, tout d'abord une tôle ondulée (3) puis ensuite une tôle lisse (2), puis on retire le cylindre denté et on exécute les autre étapes de production de manière en elle-même connue.
